# EUROPÄISCHE PATENTANMELDUNG

(11) **EP 0 583 001 A1**
(43) Veröffentlichungstag der Anmeldung: **16.02.1994**
(21) Anmeldenummer: 93112811.0
(22) Anmeldetag: 10.08.1993
(51) Int. Cl.: B60F 1/04

(54) **Zweiwegefahrzeug mit verschleissfreier Spurführung**

(30) Priorität: 11.08.1992 DE 4226480
(71) Anmelder: Windhoff Aktiengesellschaft, D-48431 Rheine (DE)
(72) Erfinder: Cramer, Franz-Jos., Dipl.-Ing., D-48477 Hörstel (DE); Bielefeld, Heribert, Dipl.-Ing., D-48477 Hörstel (DE)
(74) Vertreter: Habbel, Hans-Georg, Dipl.-Ing.

(57) **Zusammenfassung**

Die Erfindung schlägt zur verschleißfreien Spurführung eines schienengebundenen Zweiwegefahrzeugs vor, am Fahrzeug seitlich bewegliche Tastrollen vorzusehen, die an die Schienen abgesenkt werden können und seitliche Abweichungen der Tastrollen von ihrer vorgegebenen Nullstellung zur Ansteuerung lenkbarer Laufräder zu verwenden.

## Beschreibung

Die Erfindung betrifft ein Zweiwegefahrzeug nach dem Oberbegriff des Anspruches 1 sowie des Anspruches 4.

Es ist bekannt, derartige, frei bewegliche und nicht schienengebundene Zweiwegefahrzeuge für besondere Einsatzzwecke auf Schienen fahren zu lassen. Die Spurrollen stellen daher spezielle Spurhaltemittel beiden bekannten Zweiwegefahrzeugen dar. Um die Spurhaltung zu gewährleisten, werden dabei spezielle Spurräder abgesenkt, die mit einem umlaufenden Kragen innen an den Schienen anliegen. Dem Kurvenverlauf folgt das Fahrzeug, indem es durch die Spurräder in die Kurve gezwungen wird. Dabei tritt Verschleiß an den Schienen, an den Spurrädern und auch an den Laufrädern auf, die quer zur Fahrtrichtung auf den Schienen reiben.

Weiterhin ist aus der DE-36 19 009 C2 sowie aus der DE-39 16 730 A1 bekannt, bei nicht gattungsgemäßen Fahrzeugen eine Spurführung dadurch zu erreichen, daß keine Schienen vorgegeben sind, sondern daß spezielle Leitvorrichtungen in den Untergrund eingebracht oder auf den Untergrund aufgeklebt werden. Dabei können diese Leitvorrichtungen als aktive Sender oder als passive Reflektionselemente für einen fahrzeugseitig angeordneten Sender ausgebildet sein. Derartige Systeme sind beispielsweise dazu geeignet, automatisierte Fahrzeuge in Werkhallen auf bestimmten Wegen zu führen.

Der Erfindung liegt die Aufgabe zugrunde, ein gattungsgemäßes Fahrzeug dahingehend zu verbessern, daß es bei schienengebundenem Einsatz verschleißfrei in der Spur läuft.

Diese Aufgabe wird erfindungsgemäß durch die Ausbildung des Fahrzeugs gemäß dem kennzeichnenden Teil des Anspruches 1 bzw. des Anspruches 4 gelöst.

Die Erfindung schlägt mit anderen Worten vor, keine starre Anordnung der Spurräder vorzusehen, die das Fahrzeug in den Kurvenverlauf hineinzwingt. Vielmehr sind die vorderen Spurräder als reine Tastrollen seitlich beweglich gelagert, so daß das Einleiten einer Kurvenfahrt zu einer seitlichen Verschiebung dieser Tastrollen führt.

Die Abweichung von der Nullstellung der Tastrollen, die diese bei Geradeausfahrt einnehmen, wird zur Lenkung der lenkbaren Laufräder herangezogen, so daß im Idealfall die Tastrollen eine Abweichung von +/- 0 gegenüber ihrer Nullstellung aufweisen. Da nicht nur der seitliche Versatz der Spurräder, also der Tastrollen, schnell ausgeglichen wird, sondern auch die Lenkräder dem Kurvenverlauf der Schienen angepaßt werden, werden alle drei Verschleißfaktoren, nämlich an den Schienen, an den Tastrollen und an den Laufrädern, ausgeschaltet.

Das erfindungsgemäße Fahrzeug weist neben den seitlich beweglichen Tastrollen und den lenkbaren Laufrädern einen Lenkrechner auf, der die eingehenden Signale, welche die Abweichung der Tastrollen gegenüber ihrer Nullstellung darstellen, in Steuerimpulse für eine kraftunterstützte Lenkeinrichtung, z. B. eine hydraulische Lenkung, umsetzt. Eine Rückmeldung der Stellung der lenkbaren Laufräder kann dabei eine automatische Regelung der Lenkung ermöglichen.

Vorteilhaft weist das Flurfahrzeug, welches als Schleppfahrzeug oder Rangierfahrzeug ausgelegt ist, vier Laufräder auf mit einer Allradlenkung, so daß eine optimale Spuranpassung an den Kurvenverlauf der Schienen gewährleistet werden kann.

Dabei kann sowohl vor als auch hinter dem Fahrzeug eine Achse mit Tastrollen vorgesehen sein, so daß das Fahrzeug bei Vorwärts- und Rückwärtsfahrt gleichermaßen spurtreu und verschleißfrei gefahren werden kann.

Die seitlich beweglichen Tastrollen stehen mechanische Sensoren dar, um eine seitliche Abweichung gegenüber den Schienen festzustellen. Anstelle der mechanischen Sensoren in Form der Tastrollen können auch berührungslose Sensoren vorgesehen sein, beispielsweise magnetische, induktive oder optische Sensoren. In jedem Fall wird ein System zur verschleißfreien Steuerung des Fahrzeugs ermöglicht, welches ohne Umrüstungen oder Zusatzeinrichtungen am Boden auskommt, sondern welches ausschließlich mit Hilfe der vorhandenen Schienen funktioniert. Die optischen Sensoren können beispielsweise auf die reflektierende, blanke Oberfläche der Schienen gerichtet sein.

Ein Ausführungsbeispiel der Erfindung wird anhand der Zeichnung im folgenden näher erläutert. Dabei zeigt
- Fig. 1: schematisch eine Seitenansicht eines erfindungsgemäßen Fahrzeuges und
- Fig. 2: schematisch eine Draufsicht auf das Fahrzeug von Fig. 1.

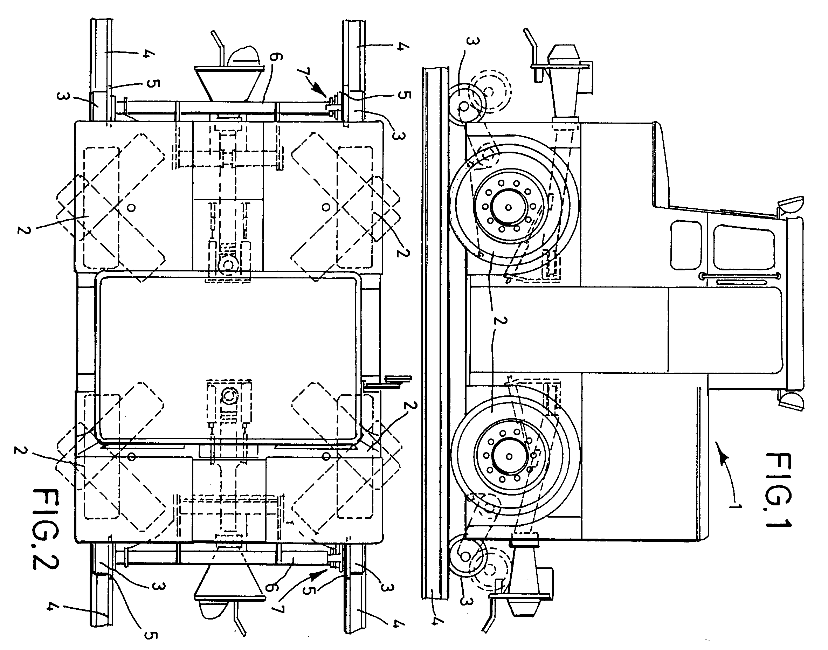

In Fig. 1 ist ein Flurfahrzeug 1 dargestellt mit vier Laufrädern 2 und vier Tastrollen 3. In der durchgezogenen Darstellung sind die Tastrollen 3 auf Schienen 4 abgesenkt, während bei Flurfahrt die Tastrollen 3 in eine gestrichelt dargestellte angehobene Stellung verfahren werden können.

Aus Fig. 2 ist ersichtlich, daß die Laufräder 2 der Spurweite der Schienen 4 angepaßt sind, so daß das Fahrzeug 1 problemlos auch auf Gleisen fahren kann. Umlaufende Kragen 5 an den Tastrollen 3 gewährleisten, daß die Tastrollen 3 dem Schienenverlauf folgen.

Jeweils zwei Tastrollen 3 sind zu einer gemeinsamen Achse zusammengefaßt, wobei innerhalb eines starr am Fahrzeug 1 befestigten Rohres 6 eine seitlich verschiebbare Welle drehbar gelagert ist, welche die beiden Tastrollen 3 einer Achse miteinander verbindet. Bei 7 ist eine Aufnahmeeinrichtung angedeutet, die die Stellung und insbesondere die seitliche Verschiebung der Tastrollen 3 registriert.

Von dieser Aufnahmeeinrichtung werden Signale einem Lenkrechner zugeführt. Von dem Lenkrechner werden wiederum Steuersignale an eine Lenkhydraulik gegeben, die die vier lenkbaren Laufräder 2 entsprechend stellt. Dadurch, daß alle vier Laufräder 2 lenkbar sind und daß Tastrollen 3 sowohl vor als auch hinter dem Fahrzeug 1 angeordnet sind, ist das Fahrzeug gleichermaßen für Vorwärts- wie für Rückwärtsfahrt verschleißfrei auf den Schienen 4 zu führen.

Es kann daher problemlos in Straßenbahnhöfen als Rangier- oder Zugfahrzeug eingesetzt werden und beispielsweise Straßenbahnzüge, deren Antriebseinheit ausgefallen ist, verfahren. Um schnellst-möglich zum Einsatzpunkt zu gelangen und dabei den üblichen schienengebundenen Verkehrsbetrieb so wenig wie möglich zu stören, kann das Fahrzeug 1 mit angehobenen Tastrollen 3 unabhängig vom Schienenverlauf verfahren werden.

Bei dem beschriebenen Ausführungsbeispiel stellen die Tastrollen 3 mechanische Sensoren dar, die mechanisch durch die Schienen 4 geführt und seitlich verschoben werden. Die Kontrolle des seitlichen Abstandes der Sensoren zu den Schienen erfolgt also mechanisch. In Abwandlung des beschriebenen Ausführungsbeispiels können anstelle dieser mechanischen Sensoren beispielsweise auch optische Sensoren Verwendung finden. Diese können fest und seitlich unbeweglich am Fahrzeug montiert sein und auf eine reflektierende, beispielsweise fluoreszierende Fläche in Form eines Streifens gerichtet sein, der im Bereich der Schienen verläuft. Im einfachsten Fall kann hierzu die blanke Oberfläche der Schienen verwendet werden. Gegebenenfalls kann jedoch mit geringem Aufwand ein derartiger reflektierender Streifen an den Schienen angebracht, z. B. in Form einer Farbe aufgesprüht werden.

Seitliche Veränderungen des Fahrzeugs zu dem Schienenverlauf beim Einleiten einer Kurve beispielsweise führen zu einem unterschiedlichen Sättigungsgrad der die Reflektion aufnehmenden Elemente, da in diesem Fall ein unterschiedlich breiter Anteil des Streifens im Erfassungsfeld des Sensors liegt. Mit Hilfe dieses unterschiedlichen Signalverhaltens des Sensors kann der Lenkrechner angesteuert werden, der seinerseits die lenkbaren Laufräder stellt.

Weiterhin können beispielsweise magnetische oder induktive Sensoren verwendet werden. Bei geeignetem Schienenunterbau können Störsignale, wie sie beispielsweise von eisernen Schienenschwellen ausgehen könnten, nicht vorhanden sein, so daß derartige Sensoren einsetzbar sind.

## Patentansprüche

1. Zweiwegefahrzeug mit Laufrädern, wobei die Laufräder wenigstens einer Achse lenkbar ausgebildet sind sowie mit Spurrädern, wobei die Spurräder für einen schienengebundenen Einsatz des Fahrzeugs zur Anlage an den Schienen absenkbar sind, dadurch gekennzeichnet, daß die Spurräder als Tastrollen ausgebildet und seitlich beweglich gelagert sind, wobei den Tastrollen eine Auswertungseinheit zugeordnet ist für die Erkennung der Position der Tastrollen, und durch einen Lenkrrechner, der eingangsseitig mit der Auswertungseinheit verbunden ist sowie ausgangsseitig mit einer kraftunterstützten Lenkeinrichtung zur Steuerung der lenkbaren Laufräder.

2. Zweiwegefahrzeug nach Anspruch 1, gekennzeichnet durch vier Laufräder (2), wobei alle Laufräder (2) lenkbar sind.

3. Zweiwegefahrzeug nach Anspruch 1 oder 2, gekennzeichnet durch Tastrollen (3) vor und hinter dem Fahrzeug (1).

4. Zweiwegefahrzeug mit Laufrädern, wobei die Laufräder wenigstens einer Achse lenkbar ausgebildet sind sowie mit Spurhaltemitteln, wobei die Spurhaltemittel für einen schienengebundenen Einsatz des Fahrzeugs bis in die Nähe der Schienen absenkbar sind, gekennzeichnet durch magnetische, induktive oder optische Sensoren als Spurhaltemittel, wobei eine Auswertungseinheit zur Auswertung des Sensorsignalverhaltens vorgesehen ist, welche einem Lenkrechner zur Steuerung der lenkbaren Laufräder zugeordnet ist.
